# EUROPÄISCHE PATENTSCHRIFT

(11) **EP 0 768 355 B1**
(45) Veröffentlichungstag und Bekanntmachung des Hinweises auf die Patenterteilung: **01.12.1999**
(21) Anmeldenummer: 96115503.3
(22) Anmeldetag: 27.09.1996
(51) Int. Cl.: C09J 123/08, C09J 7/02

(54) **Mindestens einschichtige Schmelzklebfolie mit Release- und trennmittelfreier Wickelbarkeit und verbesserter Adhäsion aus Olefin-Copolymer-Mischungen**
At least mono-lacquered melt-adhesive film wrappable without release or separation layers and improved adhesion from mixtures of olefin-copolymers
Film adhésif à chaud au moins mono-couche enroulable sans couche de décollage ni de séparation ayant une adhésion améliorée à base de copolymères d'oléfines

(30) Priorität: 10.10.1995 DE 19537753
(43) Veröffentlichungstag der Anmeldung: 16.04.1997
(73) Patentinhaber: WOLFF WALSRODE AG, 29655 Walsrode (DE)
(72) Erfinder: Gernot, Thomas, Dr., 27283 Verden (DE); Schultze, Dirk, Dr., 29683 Fallingbostel (DE); Kunold, Reinhard, Dipl.Ing., 29683 Fallingbostel (DE)
(74) Vertreter: Pettrich, Klaus-Günter, Dr.

(56) Entgegenhaltungen:
- EP-A- 0 405 789
- EP-A- 0 424 724
- EP-A- 0 424 761
- EP-A- 0 707 054

## Beschreibung

Die Erfindung betrifft mindestens einschichtige Schmelzklebefolien aus polaren Olefin-Copolymeren für das flächige Fixieren oder Verbinden anderer Substrate. Sie lassen sich unter Verzicht auf Trennmittel oder Trennbahnen auf- und abwickeln. Durch eine rauhe Oberfläche besitzen die Folien gute Maschinengängigkeiten. Die eingesetzten polaren Comonomere enthalten Sauerstoffatome. Durch einen hohen Anteil polarer Comonomere wird eine verbesserte Adhäsion erzielt.

Die erfindungsgemäßen thermoplastischen Hotmelt- oder Schmelzklebefolien eignen sich insbesonders zum Verkleben von Zellstoff basierenden Produkten sowie von Kunststoffen. Hierbei eignen sie sich vorzugsweise zum Verkleben von Polyolefinen. Sie sind vorteilhafterweise einzusetzen zum Verkleben von Bahnmaterialien wie Papieren, Pappen, Folien, Webwaren aber auch Vliesen. Sie können auch für Fixier- und Versiegelungsanwendungen eingesetzt werden. Durch ihren thermoplastischen Charakter bieten sie sich für wiederholte Aufschmelzvorgänge an und ermöglichen damit die Möglichkeit unter ihrer Verwendung aufgebaute Verbunde nachträglich wieder zu lösen. Die eingesetzten Substrate derart erzeugter Verbunde lassen sich damit auch einem werkstofflichen Recycling zuführen.

Für die Zwecke der vorliegenden Erfindung wird unter einer Schmelzklebefolie eine Folie auf Basis von thermoplastischen Kunststoffen verstanden, die im geschmolzenen Zustand infolge ihrer dann vorhandenen Oberflächenklebrigkeit und Fließfähigkeit sowie ihrer Dicke geeignet ist, andere Substrate zu verbinden.

Es ist bekannt, daß sich Olefin-Copolymere mit Sauerstoff-Atome enthaltenden Comonomeren für den Einsatz als Schmelzklebstoffe oder als Rezepturkomponente für Schmelzklebstoffe eignen. Die Copolymere sind beispielsweise von Saechtling im: Kunststoff Taschenbuch, 24. Ausgabe, Hanser Verlag, München 1989, S. 243-246, oder von Domininghaus in: Die Kunststoffe und ihre Eigenschaften, 4. Auflage, VDI Verlag, Düsseldorf 1992, S. 82-123, beschrieben.

Die Sauerstoff-enthaltenden Olefin-Copolymere sind für ihren elastischen Charakter und verbesserte Hafteigenschaften bekannt. Zu den nach dem Stand der Technik realisierten Anwendungen zählen Haftvermittler- oder Siegelschichten in coextrudierten Folien, aber auch haftfeste Beschichtungen auf Metallen, Glas und Papier sind bekannt.

Zu den wichtigsten, in Olefin-Copolymeren enthaltenen, polaren Comonomerresten zählen die des Vinylacetats, in verseifter ebenso wie in unverseifter Form; der Acrylsäure sowie ihrer Ester und Salze und der Methacrylsäure sowie ihrer Ester und Salze.

Mit steigendem Comonomergehalt sinkt i.a. die Kristallisationsneigung des Copolymerisats, so daß u.a. Flexibilität, Transparenz, Spannungsrißbeständigkeit ebenso wie Klebrigkeit, Heißsiegelfähigkeit und Schweißbarkeit steigen bzw. verbessert werden. Da der Schmelzpunkt zudem absinkt, bieten sich die polaren Olefin-Copolymerisate damit idealerweise als Rohstoffe für Schmelzklebeanwendungen an, wobei hierfür Copolymerisate mit hohen Comonomergehalten von 18-40 Massen-% eingesetzt werden. Den Mechanismus der verbesserten Haftung erläutert z.B. Elias in: Makromoleküle, Bd. 2, 5. Auflage, Hüthig & Wepf Verlag, Basel 1992, S. 134-135. In Abhängigkeit von den zu verklebenden Substraten und ihrer Oberfläche werden als Hotmelt-Rohstoffe im allgemeinen Materialien mit guten Fließeigenschaften, d.h. hohem Schmelzflußindex eingesetzt. Am Markt sind polare Olefin-Copolymere mit Schmelzflußindices von kleiner 0,1 g/10 min bis über 500 g/10 min erhältlich, jeweils gemessen nach DIN 53 735 bei 190°C und einer Prüfbelastung von 2,16 kg.

Ebenso ist es bekannt, Schmelzklebefolien aus thermoplastischen Hotmelt-Rohstoffen herzustellen und zu verarbeiten.

Die Klebkaft der Copolymere steigert sich bekannterweise mit steigendem Comonomergehalt. Für Schmelzklebefolien werden allgemein Copolymere mit Comonomergehalten über 16 Massen-% eingesetzt. Mit steigendem Comonomergehalt verringeren sich aber auch die Verarbeitungsmöglichkeiten. Während aus polaren Copolymeren mit Comonomergehalten unter 10 Massen-% ohne größere Schwierigkeiten Folien erhalten werden können, ist es gleichermaßen bekannt, daß Materialien mit Comonomergehalten ab 16 Massen-% auf dem Wickel verblocken.

Mit steigendem Comonomergehalt erhöhen sich Transparenz und Glanz der erhaltenen Folie, die Oberfläche der hergestellten Halbzeuge wird glatter.

Die Zugabe der bekannten Antiblock- und Entformungsmittel verbietet sich bzw. hat unerwünschte Nebeneffekte für Schmelzklebefolien, da sich durch den Einsatz dieser Materialien die Klebkraft der Folie in dem Maße verringert, wie die Additive die Folienoberflächen belegen. Die Zugabe von anorganischen Abstandshaltern, die eine diskrete Verteilung in der Polymermatrix besitzen, resultiert in etwa in einem Klebkraftabfall proportional zum Additivgehalt. Die Zugabe von Entformungsmitteln, vielfach wachsartige Substanzen, die aufgrund ihrer Unverträglichkeit mit der Polymermatrix aus dieser hinausmigrieren und einen Film auf der Folienoberfläche bilden, bewirkt u.U. einen drastischen Verlust an Klebkraft.

Bedingt durch den weichen Charakter der Copolymere und ihre geringen Erweichungs- bzw. Schmelztemperaturen besitzen Folien aus diesen Materialien zudem den Nachteil, daß sie sehr glatte Oberflächen aufweisen, die dadurch den Folien einen blockigen Charakter geben. Hierdurch sind Maschinengängigkeiten beeinträchtigt, die Folien müssen permanent durch bewegliche Teile geführt oder mit Trennmaterialbahnen belegt werden, um eine Verbindung mit stehenden Teilen und damit die Unterbrechung des Prozesses zu verhindern.

Eine weitere Möglichkeit, blockige Copolymere zu Filmen zu verarbeiten, besteht in der Integration in Mehrschichtaufbauten, bei denen sich die verschiedenen Schichten nur in der Wärme verbinden und in der Kälte nicht gegeneinander verblocken. So beschreiben die Offenlegungsschriften US 4 629 657, EP 0 424 761 oder EP 0 263 882 Polyolefinfolien, die mit heißklebefähigen Stoffen beschichtet sind. In diesem Fall übernimmt die weniger klebrige Schicht die Funktion der Trennschicht. Diese Folien weisen den Nachteil auf, daß sie nur eine heißklebefähige Seite besitzen, zudem ist die erzielbare Verbundhaftung gering und die Endprodukte besitzen eine nicht unerhebliche Rollneigung. In der EP 0424761 erwähnte Schichten aus Mischungen polarer Olefin-Copolymerisate wurden nicht zu einzelnen, selbsttragenden Schichten verarbeitet. Sie besaßen zudem eine Trenn- oder Trägerschicht aus Polypropylen, so daß sie nicht in einen Wickelkontakt mit sich selbst treten konnten.

Aufgrund der hohen Blockigkeit bzw. geringen Gleitfähigkeit der einschichtig mit üblichen Olefin-Copolymeren beschichteten Folien kommt es zu Schwierigkeiten bei der Maschinengängigkeit: Falten ziehen sich nicht mehr von alleine glatt, es muß mit einer Vielzahl von Breitstreckeinrichtungen gearbeitet werden. Letztere müssen angetrieben werden oder machen einen hohen Bahnzug notwendig. Insbesondere bei weichen Olefin-Copolymeren kommt es bei höherem Bahnzug zu deutlichen Einschnürungen, so daß eine Dimensionstreue nicht mehr gewährleistet ist. Angetriebene Breitstreckwalzen bedeuten einen sehr viel größeren technischen Aufwand.

Beim Einsatz als Fixiermedien ist es zudem von Nachteil, wenn die zu fixierenden Teile aufgrund der Materialblockigkeit nicht gegeneinander justiert werden können.

Allgemein verbreitet für die Verarbeitung dieser Materialien zu einschichtigen Bahnen ist der Einsatz von Trennmaterialien. Bekannte universell einsetzbare Trennmaterialbahnen bestehen beispielsweise aus silikonisierten Papieren, Geweben oder Folien.

Der Nachteil von Trennfilmen oder anderen Bahnmaterialien, wie sie beispielsweise in der DE 2 114 065 erwähnt sind, liegt darin, daß sie zusätzliche Lagerund Verarbeitungskapazitäten benötigen. Trennmaterialien lassen sich nie vollständig recyclieren, damit stellen Trennmaterialien auch eine finanzielle und ökologische Belastung dar. Zusätzlich besteht durch den Verzicht auf Trennmittel nicht mehr das Risiko, daß sich ein Abklatsch migrierender Substanzen aus oder von dem Trennmaterial auf dem Schmelzklebefilm niederschlagen und damit die Klebewirkung beeinträchtigen kann.

Die nicht vorveröffentlichte DE 4 436 775 beschreibt einschichtige, Olefin-Copolymer basierende Schmelzklebefolien mit Release- und Trennmittel-freier Wickelbarkeit und verbesserter Adhäsion, die aus Mischungen von Olefin-Copolymerisaten mit unterschiedlichen Comonomeren hergestellt werden. Seitens der Anwender besteht aber vielfach die Forderung nach materialeinheitlichen Schmelzklebefolien.

Weiterhin offenbart die EP-A-424 761 als Teil einer Mehrschichtfolie eine heißkaschierbare Schicht, die im wesentlichen ein Ethylenvinylacetat-Copolymer zusammen mit einem Ethylenethylacrylat-Copolymer und/oder ein Ethylen-Acrylsäure-Copolymer. Auch hier werden Ethylen-Copolymer mit chemisch unterschiedlichen Comonomeren eingesetzt und die Forderung nach Materialeinheitlichkeit ist damit nicht erfüllt.

Es stellte sich den Erfindern daher die Aufgabe, eine materialeinheitliche mindestens einschichtige Folie mit hoher Klebkraft für Thermokaschierung, -versiegelung und -fixierung bereitzustellen, die sich Trennmittel-frei wickeln und sich blockarm gleitend über die gängigen Heißkaschiermaschinen und Fixierpressen führen läßt.

Sie sollte zudem in ihrer Zusammensetzung optimal an die zu verklebenden Substrate anpassbar sein. Sie sollte sich wiederholt aufschmelzen lassen, so daß auch ein nachträgliches Justieren fixierter Substrate oder ein Lösen der Verbunde möglich ist.

Erfindungsgemäß gelang die Herstellung einer solchen thermoplastischen, durch Wärmezufuhr und gegebenenfalls unter Druck heißkaschierbaren, wickelbaren thermoplastischen Schmelzklebefolie, durch das Abmischen polarer Olefin-Copolymerisate, die Sauerstoffatome enthalten und hinsichtlich ihrer Materialeinheitlichkeit dadurch gekennzeichnet sind, daß ihre wesentlichen Comonomere identisch sind, sie aber in bezug auf ihre jeweiligen Comonomeranteile und ihre Viskosität bei der Verarbeitungstemperatur Unterschiede aufweisen. Als olefinisches Comonomer wird Ethylen bevorzugt. Zum Erhalt einer erfindungsgemäßen Folie müssen mindestens zwei verschiedene polare, Sauerstoff -enthaltende Olefin-Copolymere A und B, die durch im wesentlichen gleiche Comonomere mit aber unterschiedlichen Comonomeranteilen und unterschiedlichen Viskositäten bei der Verarbeitungstemperatur gekennzeichnet sind, gemischt und gemeinsam unter ausreichender Scherung aufgeschlossen werden. Der Gesamtanteil der polaren, Sauerstoff enthaltenden Comonomerreste sollte zwischen 10 Massen-% und 40 Massen-%, bezogen auf die Gesamtmasse der eingesetzten Polymerharze, liegen. Mindestens ein Olefin-Copolymer sollte mit einem Masseanteil von mindestens 40 % an der Gesamtmasse der eingesetzten Polymerharze vorhanden sein. Die erfindungsgemäße Folie ist im wesentlichen frei von den üblichen Antiblockmitteln und/oder Gleitmitteln.

Für den Fachmann überraschend war, daß sich eine Mischung aus mindestens zwei polaren Olefin-Copolymeren mit hohem Anteil an polaren Comonomerresten und mit im wesentlichen gleichen Comonomeren aber unterschiedlichen Comonomeranteilen und unterschiedlichen Viskositäten bei der Verarbeitungstemperatur zu einer Folie mit einer ausreichend hohen Oberflächenrauhigkeit verarbeiten läßt, so daß kein Verblocken auf dem Wickel stattfindet Aufgrund der Oberflächenrauhigkeit liegen die Folienbahnen auf dem Wickel nicht plan übereinander, sondern berühren sich nur in den erhabenen Punkten der jeweiligen Folienlagen. Der Effekt wird durch die von der rauhen Folie in den Wickel eingeschleppte Luftmenge unterstützt, so daß kein Verblocken auftritt.

Erfindungsgemäß geeignet sind beispielsweise Olefin-Copolymer-Harze, zu deren Synthese als wesentliches olefinisches Monomer Ethylen eingesetzt wird.

In einer bevorzugten Ausführungsform werden als Comonomerreste für die polaren Olefin-Copolymere die Methacrylsäure oder ihre Salze oder Ester oder die Acrylsäure oder ihre Salze oder ihre Ester oder das Vinylacetat, in vorzugsweise unverseifter Form, eingesetzt.

In einer besonders bevorzugten Form werden Olefin-Copolymer-Harze verwendet, die als entscheidende olefinische Comonomerreste die des Ethylens aufweisen und zu deren Synthese als wesentliches polares, Sauerstoff-Atome enthaltendes Comonomeres das Vinylacetat eingesetzt wurde. Die Vinylacetat-Comonomer-Reste liegen hierbei in vorzugsweise unverseifter Form vor.

In einer bevorzugten Ausführungsform besteht die Folie hauptsächlich aus polaren, Sauerstoff enthaltenden Olefin-Copolymeren, deren Comonomergehalt so gewählt ist, daß der Gesamtanteil an polaren, Sauerstoff enthaltenden Comonomeren der die Folie bildenden Copolymere zwischen 22 Massen-% und 30 Massen-% beträgt.

Für möglichst rasche Verklebungen, die durch eine leichte Aufschmelzbarkeit der eingesetzten Schmelzklebefolien charakterisiert ist, werden für die erfindungsgemäßen Schmelzklebefolien Olefin-Copolymere eingesetzt, deren Maxima ihrer thermoanalytisch ermittelten Hauptschmelzpeaks, bestimmt nach ASTM D 3418 unter 90°C liegen.

In einer besonderen Ausführungsform sind die erfindungsgemäßen Schmelzklebefolien als sogenannte Dublofolien ausgeführt. Diese weisen zusätzlich zu der bereits beschriebenen Schmelzklebeschicht mindestens eine zweite, höher schmelzende Schicht auf, so daß lediglich eine Seite eine Schmelzklebecharakteristik besitzt, während die zweite Aussenseite bei der Verklebung nicht oder nicht vollständig aufgeschmolzen wird.

Bevorzugt werden Dublofolien, bei denen die Hauptschmelztemperaturen, d.h. die Schmelztemperaturen, bestimmt nach ASTM D 3418 als die dem Peak-Extremwert des flächenmäßig größten endothermen Peak zugeordneten Temperaturen, der beiden Aussenschichten der Dublofolie mindestens 15 °C von einander abweichen.

In einer speziellen Ausführungsform der Dublofolie wird die höher erweichende Schicht aus Polyethylen und/oder Ethylen-Copolymer-Harzen gebildet.

In einer weiteren speziellen Ausführungsform der Dublofolie wird die höher erweichende Schicht aus Polypropylen und/oder Propylen-Copolymer-Harzen gebildet.

Zur Herstellung von Folien werden bevorzugt olefinische Schmelzkleberohstoffe mit vergleichsweise niedrigen Schmelzflußindices eingesetzt, d.h. deutlich kleiner 100 g/10 min bei 190°C und 2,16 kg (DIN 53 735). Bei porösen Substraten bietet das damit verbundene viskose Fließen den Vorteil, daß der eingesetzte Film als solcher an der Oberfläche des Substrates weiterhin vorhanden bleibt und dessen Cavitäten nicht vollständig auffüllt.

Eine Auswahl des Schmelzflußindexes ermöglicht eine Anpassung an die Oberflächenstruktur der Substrate sowie die Verarbeitungsmaschinen, für poröse, rauhe Oberflächen ebenso wie für geringe Verarbeitungsdrücke werden Copolymere mit höheren Schmelzflußindices eingesetzt, Copolymere mit niedrigen Schmelzflußindices hingegen für vergleichsweise feine bis glatte Substrate und hohe beitungsdrücke.

Für die erfindungsgemäße Folie eignen sich polare Copolymere mit einem Schmelzflußindex von 0,1 g/10 min bis 100 g/10 min bei 190°C und 2,16 kg Prüfmasse (DIN 53 735), bevorzugt zwischen 1,0 g/10 min und 75 g/10min.

Werden Ethylenvinylacetat-Copolymere als Matrixharze eingesetzt, so hat eins der mindestens zwei eingesetzten Harze in einer bevorzugten Ausführung einen Schmelzflußindex zwischen 0,1 g/10 min und 15 g/10 min bei 190°C und 2,16 kg Prüfmasse (DIN 53 735), besonders bevorzugt zwischen 1,0 g/10 min und 8 g/10 min. In dieser bevorzugten Ausführung hat mindestens ein weiteres Harz einen Schmelzflußindex von 15 g/10 min bis 75 g/10 min bei 190°C und 2,16 kg Prüfmasse (DIN 53 735), bevorzugt von 30 g/10 min bis 60 g/10 min.

Durch Auswahl geeigneter polarer Copolymere ist eine Anpassung der Klebeeigenschaften an die gewünschten Substrate möglich. Werden Säurecopolymere oder Ionomere gewählt, lassen sich bessere Verklebungseigenschaften mit Metall oder Glas erzielen, bei Einsatz von Vinylacetat-Copolymeren wird die Haftung zu Papier und Zellstoff-basierenden Produkten optimiert.

Entscheidend für die trennmaterialfreie Wickelbarkeit ist die Ausbildung einer ausreichenden Oberflächenrauhigkeit, die nur dann erfolgt, wenn die eingesetzten polaren Copolymere Comonomere aufweisen, die in der Schmelze bereits Domänen ausbilden, so daß von einer Entmischungsstruktur gesprochen werden kann. Nicht naheliegend war, daß die Comonomere der polaren Olefin-Copolymere hinreichend unlöslich ineinander sind, daß sich die notwendige Entmischungsstruktur ausprägen kann. Der Aufschluß der Mischung aus den verschiedenen polaren Olefin-Copolymeren muß außerdem unter ausreichender Scherung erfolgen, damit größere Domänen in der Schmelze im Schergefälle zerteilt werden, da die sonst aus dem Folienwerkzeug ausgetragenen Entmischungsstrukturen derart große Dimensionen erreichen können, daß sie als Gelkörper die Ausformung zu Folie stören. Sie stellen die Ursache für unerwünscht hohe Dickentoleranzen und mögliche Abrisse der zu Folie ausgezogenen Schmelze dar.

Die Schmelze kann in den für die Folienherstellung bevorzugten Aufschlußwerkzeugen, die nach dem Schneckenprinzip arbeiten oder nachgeschalteten Mischaggregaten oder auch im Folienwerkzeug einer Scherung unterworfen werden. Besonders bevorzugt ist die Scherung der Schmelze in dem nach dem Schneckenprinzip arbeitenden Aufschlußwerkzeug und/oder einem direkt nachgeschalteten dynamischen Mischaggregat.

Die erfindungsgemäßen Folien lassen sich nach dem Flachfolien- oder nach dem Blasfolienverfahren herstellen In einer bevorzugten Ausführung werden die Folien nach dem Blasfolienverfahren hergestellt. Das Blasfolienverfahren ermöglicht durch unterschiedliche Aufblasverhältnisse eine flexible Anpassung der Liegebreite an die Erfordernisse des Marktes.

In einer bevorzugten Ausführung besitzen die erfindungsgemäßen Folien eine Dicke von 20 µm bis 200 µm und in einer besonders bevorzugten Ausführung zwischen 30 µm und 70 µm.

Bestandteile der erfindungsgemäßen Schmelzklebefolie können weiterhin die üblichen Additive und Hilfsmittel sein, dies sind beispielsweise Stabilisatoren, optische Aufheller, Farbstoffe und Keimbildner oder Füllstoffe.

Die gängigen Additive und Hilfsmittel sind von Gächter und Müller im: Taschenbuch der Kunststoff-Additive, 2. Ausgabe, Hanser Verlag, München 1983, beschrieben.

Die erfindungsgemäßen Folien lassen sich mit Hilfe der gängigen Oberflächenbehandlungsverfahren, bevorzugt sind Corona-, Flamm- und/oder Fluor-Behandlung, in ihren Oberflächeneigenschaften an zu verbindende Substrate anpassen. Verschiedene Verfahren zur Oberflächenmodifikation sind beispielsweise von Gerstenberg in: Coating 4/93, S.119-122, beschrieben.

Gegenstand der Erfindung ist weiterhin ein Verfahren zur Herstellung von Verbunden aus beliebigen Substraten und einer erfindungsgemäßen Folie, dadurch gekennzeichnet, daß man die Folie mit mindestens einem Substrat unter Wärmeeinfluß und vorzugsweise nur geringem Druck zusammenbringt. In einer bevorzugten Ausführung wird die Folie zwischen zwei unterschiedliche Substrate gelegt und verbindet diese nach Zusammenführung und dem Einfluß von Wärme und Druck.

Bei den Substraten handelt es sich vorzugsweise um Bahnmaterialien oder Abschnitte davon. Solche Bahnmaterialien sind beispielsweise Webwaren, Vliese, Folien, Papiere, Pappen und Kartonagen. Sie bestehen aus Zellstoff oder Zellstoffenthaltenden Produkten, anderen pflanzlichen Produkten, Fasermaterialien, Kunststoffen oder auch Metallen.

Gegenstand der Erfindung sind ferner Folienab- oder -ausschnitte allgemein durch Stanzen oder Schneiden hergestellt und ihr Einsatz zum Fixieren und/oder Versiegeln von Materialien oder Gegenständen gegeneinander, dadurch gekennzeichnet, daß Ab- oder Ausschnitte der erfindungsgemäßen Folie zwischen zwei gleiche oder unterschiedliche Materialien oder Gegenstände gebracht werden und eine Verbindung in Form einer Versiegelung oder Fixierung unter Wärme und optional Druck stattfindet. Als dieserart zu verbindende Stoffe kommen bevorzugt Zellstoff oder Zellstoff enthaltende Produkte, Hölzer, pflanzliche und tierische Fasermaterialien, Kunststoffe, Metalle und Gläser in Frage.

Die erfindungsgemäßen Verbunde und/oder Verbindungen sind thermoreversibel Sie lassen sich somit nach dem Einsatz wieder in die Ausgangskomponenten zerlegen, so daß die verwendeten Materialien dem werkstofflichen Recycling zur Verfügung stehen.

### Beispiele

### Beispiel A

Eine Mischung aus 60 Massen-% eines Ethylen-Vinylacetat-Copolymeren I und 40 Massen-% eines Ethylen-Vinylacetat-Copolymeren II wurden in einem Schneckenwerkzeug unter Scherung und Wärmeeintrag aufgeschlossen. Das Ethylenvinylacetat-Copolymer I hatte einen Schmelzflußindex von unter 2 g/10 min, gemessen nach DIN 53 735 bei 190°C unter einer Prüfmasse von 2,16 kg. Der Vinylacetat-Anteil des Copolymeren betrug etwa 18 Massen-%, die Dichte lag bei 0,94 g/cm³. Das Ethylen-Vinylacetat-Copolymer II hatte einen Schmelzflußindex von über 50 g/10 min, gemessen nach DIN 53 735 bei 190°C unter einer Prüfmasse von 2,16 kg. Der Vinylacetat-Anteil dieses Copolymers betrug etwa 40 Massen-%. Die Dichte des Ethylen-Vinyl-Acetat-Copolymers II lag bei 0,97 g/cm³. Der mittlere Vinylacetat-Anteil der für die Rohstoffharz-Mischung eingesetzten Copolymere betrug 26,8 Massen-%. Aus der Schmelze wurde mit Hilfe eines Blasfolienwerkzeuges eine Schlauchfolie geformt, flachgelegt und aufgewickelt. Muster für die Bestimmung der Vergleichseigenschaften konnten problemlos nach mehreren Tagen Wartezeit vom Wickel abgerollt werden. Die erhaltenen Folienmuster wiesen eine Dicke von 40 µm auf.

### Beispiel B

Eine Folie wurde unter den Bedingungen des Beispiels A hergestellt, jedoch zu einer Folie mit einer mittleren Dicke von 30 µm ausgezogen.

### Beispiel C

Eine Mischung aus 40 Massen-% eines Ethylen-Vinylacetat-Copolymeren I und 40 Massen-% eines Ethylen-Vinylacetat-Copolymeren II sowie 20 Massen-% eines Ethylen-Vinylacetat-Copolymeren III wurden in einem Schneckenwerkzeug unter Scherung und Wärmeeintrag aufgeschlossen. Das Ethylenvinylacetat-Copolymer I hatte einen Schmelzflußindex von unter 2 g/10 min, gemessen nach DIN 53 735 bei 190°C unter einer Prüfmasse von 2,16 kg. Der Vinylacetat-Anteil des Copolymeren I betrug etwa 18 Massen-%, die Dichte lag bei 0,94 g/cm³. Das Ethylen-Vinylacetat-Copolymer II hatte einen Schmelzflußindex von über 50 g/10 min, gemessen nach DIN 53 735 bei 190°C unter einer Prüfmasse von 2,16 kg. Der Vinylacetat-Anteil dieses Copolymeren II betrug etwa 40 Massen-%. Die Dichte betrug 0,97 g/cm³. Als dritte Ethylen-Vinylacetat-Komponente wurde ein Copolymer-Harz III mit einem Vinylacetat-Anteil von etwa 28 Massen-% und einer Dichte von 0,96 g/cm³ eingesetzt. Die Viskosität des Copolymer-Harzes III unter Verarbeitungsbedingungen war durch einen Schmelzflußindex zwischen 2 und 4 g/10 min, gemessen nach DIN 53 735 bei 190 °C unter einer Prüfmasse von 2,16 kg charakterisiert. Aus der Schmelze wurde mit Hilfe eines Blasfolienwerkeine Schlauchfolie geformt, flachgelegt und aufgewickelt. Muster für die Bestimmung der Vergleichseigenschaften konnten problemlos nach mehreren Tagen Wartezeit von dem Wickel abgerollt werden. Die erhaltenen Folien waren 40 µm dick.

### Beispiel D

Eine Mischung aus 40 Massen-% eines Ethylen-Vinylacetat-Copolymeren I und 40 Massen-% eines Ethylen-Vinylacetat-Copolymeren II sowie 20 Massen-% eines Ethylen-Vinylacetat-Copolymeren III wurden in einem Schneckenwerkzeug unter Scherung und Wärmeeintrag aufgeschlossen. Das Ethylenvinylacetat-Copolymer I hatte einen Schmelzflußindex von unter 2 g/10 min, gemessen nach DIN 53 735 bei 190°C unter einer Prüfmasse von 2,16 kg. Der Vinylacetat-Anteil des Copolymeren I betrug etwa 18 Massen-%, die Dichte lag bei 0,94 g/cm³. Das Ethylen-Vinylacetat-Copolymer II hatte einen Schmelzflußindex von über 50 g/10 min, gemessen nach DIN 53 735 bei 190°C unter einer Prüfmasse von 2,16 kg. Der Vinylacetat-Anteil dieses Copolymeren II betrug etwa 40 Massen-%. Die Dichte betrug 0,97 g/cm³. Als dritte Ethylen-Vinylacetat-Komponente wurde ein Copolymer-Harz III mit einem Vinylacetat-Anteil von etwa 28 Massen-% und einer Dichte von 0,96 g/cm³ eingesetzt. Die Viskosität des Copolymer-Harzes III unter Verarbeitungsbedingungen war durch einen Schmelzflußindex zwischen 6 und 8 g/10 min, gemessen nach DIN 53 735 bei 190 °C unter einer Prüfmasse von 2,16 kg charakterisiert. Aus der Schmelze wurde mit Hilfe eines Blasfolienwerkzeuges eine Schlauchfolie geformt, flachgelegt und aufgewickelt. Muster für die Bestimmung der Vergleichseigenschaften konnten problemlos nach mehreren Tagen Wartezeit von dem Wickel abgerollt werden. Die erhaltenen Folien waren 40 µm dick.

### Vergleichsbeispiel 1

Ein Ethylenvinylacetat-Copolymer mit einem Vinylacetatanteil von 28 Massen-% wurde mit dem gleichen, für die Beispiele A bis D eingesetzten, Schneckenwerkzeug unter Scherung und Wärmeeintrag aufgeschlossen und zu einer Schlauchfolie ausgeformt. Das Ethylenvinylacetat-Copolymer hatte einen Schmelzflußindex zwischen 6 und 8 g/10 min gemessen bei 190°C und einer Prüfbelastung von 2,16 kg (DIN 53 735). Die Dichte lag bei 0,96 g/cm³. Die flachgelegte Folie verblockte auf dem Wickel. Durch Einschießen von silikonisiertem Trennpapier zwischen die einzelnen Lagen der Vergleichsbeispiel-Folie beim Wickeln konnten Folienmuster mit einer Dicke von, wie in den Beispielen realisiert, ebenfalls 40 µm erhalten werden, an denen die Vergleichseigenschaften abgeprüft wurden.

An den im Rahmen der Beispiele und des Vergleichsbeispiels hergestellten Folienmustern wurden die folgenden Prüfungen durchgeführt:

### Dicke

Die mittlere Dicke wurde durch mechanische Abtastung nach DIN 53 370 bestimmt.

### Abwickelverhalten

Die Abwickelbarkeit wurde an einer in eine Wickelmaschine eingespannten Folienmusterrolle geprüft. Dies geschah durch manuelles Abwickeln bei antriebsfrei geschalteter Wickelwelle.

### Haft- und Gleitreibzahl

Die dimensionslosen Haft- und Gleitreibungszahlen der Folienmuster wurden nach DIN 53 375 im Kontakt Folie/Metall bestimmt.

### Zugversuch

Der Zugversuch zur Ermittlung der Zugfestigkeit und Reißdehnung wurde nach DIN 53 455-7-5 durchgeführt. Es wurden Prüfkörper längs und quer zur Maschinenlaufrichtung entnommen.

### Rauhtiefe

Die Rauhtiefe wurde durch mechanische Abtastung mit einem Perthometer-Prüfgerät der Fa. Feinprüf-Perthen untersucht. Die angegebene Rauhtiefe entspricht der in der DIN 47 68/1 gegebenen Definition.

### Bestimmung der Schmelzpunkte

Die Hauptschmelzpunkte wurden nach der in der ASTM D 3418 dargelegten Vorgehensweise bestimmt. Als Heizrate wurden 20 K/min gewählt, die angegebenen Temperaturen entsprechen jeweils der dem Peak-Extremwert zugeordneten Temperatur.

### Bestimmung der Glanzzahl

Die dimensionslose Glanzzahl wurde nach DIN 67 530 durch Reflektometermessung bestimmt.

Die in der Tabelle 1 wiedergegebenen Daten der auf die Filmherstellung nachfolgenden Charakterisierung zeigen deutlich, daß die erfindungsgemäßen Folien aus mindestens zwei Harzen einer Vergleichsfolie aus nur einem Copolymer-Harz überlegen sind.

**Tabelle 1**

| Eigenschaften der im Rahmen der Beispiele und Vergleichsbeispiele hergestellten Folien | | | | | | | |
|---|---|---|---|---|---|---|---|
| Eigenschaft | Bestimmungsmethode | Einheit | Beispiel A | Beispiel B | Beispiel C | Beispiel D | Vergleichsbeispiel 1 |
| Dicke | DIN 53 370 | µm | 40 | 30 | 40 | 40 | 40 |
| abwickelbar | ./. | ./. | ja | ja | ja | ja | nein |
| Haftreibungszahl im Kontakt Folie /Metall | DIN 53 375 | ./. | 1,22 | 1,44 | 1,17 | 1,75 | 2,01 |
| Gleitreibungszahl im Kontakt Folie /Metall | DIN 53 375 | ./. | 1,93 | 2,00 | 1,87 | 2,01 | 2,38 |
| maximale Rauhtiefe | DIN 4768/1 | µm | 0,66 | 0,55 | 3,40 | 2,21 | 0,21 |
| Hauptschmelzpunkt | ASTM D3418 | °C | 41,4 / 84,7 | 41,1 / 83,6 | 42,7 / 85,4 | 42,7 / 85,1 | 43,9 / 71,9 |
| Zugfestigkeit längs/quer | DIN 53 455 | N/ mm² | 17,3/7,4 | 18,0/6,7 | 18,1/3,0 | 15,1/7,5 | 19,9/9,3 |
| Reißdehnung längs/quer | DIN 53 455 | % | 391/708 | 297/692 | 309/195 | 318/720 | 350/815 |
| Glanzwert unter 20° | DIN 67 530 | ./. | 2,3 | 2,2 | 1,8 | 3,6 | 108 |

Die Oberflächenrauhigkeit der erfindungsgemäßen Beispielfolien ist gegenüber der Vergleichsbeispielfolie mehr als verdoppelt. Das gleiche physikalische Phänomen wird durch den Glanzwert beschrieben: je geringer der Glanz desto rauher die Oberfläche. Die extrem niedrigen Glanzwerte der erfindungsgemäßen Beispielfolien charakterisieren die positiven Eigenschaften der erfindungsgemäßen Folien, die wesentlich durch Domänenbildung in der Matrix der Folie gekennzeichnet sind. Dies bedingt die Trennmittel-freie Wickelbarkeit, die sich für die Folie aus dem Vergleichsbeispiel nicht erzielen läßt. Gleichwohl werden Schmelztemperaturen - und damit auch die Kristallisationstemperatur - auf niedrigem Niveau realisiert. Die niedrigeren Werte der Haft- und Gleitreibungszahl, bestimmt im Kontakt von Folie zu Metall, der Folien, die für die Beispiele 1 bis 4 erhalten wurden, belegen die bessere Maschinengängigkeit der erfindungsgemäßen Folien durch leichteres Gleiten über Maschinenteile gegenüber der Vergleichsbeispielfolie aus nur einem Copolymer-Harz. Die höheren Werte für Haft- und Gleitreibungszahl von Beispiel A gegenüber Beispiel B sind durch die höhere Dicke der Beispielfolie A bedingt. Die für Vergleichsbeispiel 1 erzeugte Folie weist einen ähnlichen Gesamt-Vinylacetat-Gehalt wie die im Rahmen der Beispiele A bis D erzeugten Folien auf. Da in Vergleichsbeispiel 1 nur eine Copolymer-Harz-Komponente Eingang findet, besitzt die in Vergleichsbeispiel 1 beschriebene Folie eine deutlich glattere Oberfläche, da die innere Struktur dieser Folie nicht durch Domänenbildung charakterisiert ist. Sie verblockt dadurch bereits auf dem Wickel. Dieses Ergebnis wird auch durch die Reibungstests verifiziert.

Die an den im Rahmen der Beispiele und Vergleichsbeispiele hergestellten Folien ermittelten Reibungszahlen hängen von der Oberflächenstruktur ab. Letztere ist neben der Rezeptur und damit dem Comonomer-Anteil auch von den Foliendicke und damit den Ausziehbedingungen, denen die Polymerschmelze bei der Folienherstellung unterworfen wird, abhängig. Oberflächenparameter lassen sich deshalb bevorzugt vergleichen, wenn die Folien unter gleichen oder möglichst ähnlichen Herstellungsbedingungen erhalten werden. So werden in Beispiel B trotz gleicher Rezeptur und nur geringfügig geänderter Herstellbedingungen höhere Gleitzahlen als in Beispiel A beobachtet.

## Patentansprüche

1. Trennschichtfreie, mindestens einschichtige, thermoplastische Schmelzklebefolie, hergestellt aus einer Olefin-Copolymerharzmischung, die unter ausreichender Scherung aufgeschlossen wird, dadurch gekennzeichnet, daß sie sich ohne zusätzliche Verwendung eines Trennmaterials auf- und abwickeln läßt, im wesentlichen frei von Antiblock- und/oder Gleitmitteln ist und die im wesentlichen aus Olefin-Copolymeren mit polaren, Sauerstoff Atome enthaltenden Comonomeren gebildet wird, wobei die Olefin-Copolymer-Harzmischung aus mindestens zwei Olefin-Copolymer-Harzen A und B mit identischem olefinischen Basis-Monomer und identischem polaren, Sauerstoff-Atome enthaltenden Comonomer besteht und sich die Harze A und B hinsichtlich ihres polaren Comonomeranteils und ihrer Viskosität bei der Verarbeitungstemperatur unterscheiden, wobei der Gesamtanteil der Sauerstoff-enthaltenden Comonomere an der Gesamtmasse der die Folie bildenden Polymerharze zwischen 10 Massen-% und 40 Massen-% beträgt.

2. Folie nach Anspruch 1, dadurch gekennzeichnet, daß Ethylen als wesentliches olefinisches Monomer der zur Bildung der Copolymerharzmischung eingesetzten Olefin-Copolymer-Harze -Harze Verwendung findet.

3. Folie nach Anspruch 1 und/oder 2, dadurch gekennzeichnet, daß als Comonomerreste der polaren Copolymere Vinylacetat in vorzugsweise unverseifter Form oder Acrylsäure oder ihre Ester oder Salze oder Methacrylsäure oder ihre Ester oder Salze Verwendung finden.

4. Folie nach einem der Ansprüche 1 bis 3, dadurch gekennzeichnet, daß der Gesamtanteil der Sauerstoff-enthaltenden Comonomere an der Gesamtmasse der die Folie bildenden Polymerharze mindestens 22 Massen-% und höchstens 30 Massen-% beträgt.

5. Folie nach wenigstens einem der vorangehenden Ansprüche, dadurch gekennzeichnet, daß die Maxima ihrer thermoanalytisch ermittelten Hauptschmelzpeaks, bestimmt nach ASTM D 3418, unter 90°C liegen.

6. Folie dadurch gekennzeichnet, daß sie eine niedriger schmelzende Aussenschicht nach einem der vorangehenden Ansprüche und eine zweite, höher schmelzende Aussenschicht aufweist.

7. Folie nach Anspruch 6, dadurch gekennzeichnet, daß die Schmelztemperaturen, bestimmt nach ASTM D 3418 als die dem Peak-Extremwert des flächenmäßig größten endothermen Peak zugeordneten Temperaturen, der beiden Aussenschichten der Dublofolie mindestens 15 °C von einander abweichen.

8. Folie nach Anspruch 6 und/oder 7, dadurch gekennzeichnet, daß die höher erweichende Schicht aus Polyethylen und/oder Ethylen-Copolymer-Harzen gebildet wird.

9. Folie nach Anspruch 6 und/oder 7, dadurch gekennzeichnet, daß die höher erweichende Schicht aus Polypropylen und/oder Propylen-Copolymer-Harzen gebildet wird.

10. Folie nach wenigstens einem der vorangehenden Ansprüche, dadurch gekennzeichnet, daß sie eine Dicke von mindestens 20 µm und höchstens 200 µm und in einer besonders bevorzugten Ausführung zwischen 30 µm und 70 µm besitzt.

11. Folie nach wenigstens einem der vorangehenden Ansprüche, dadurch gekennzeichnet, daß die Folie nach dem Blasfolienverfahren hergestellt wird.

12. Folie nach wenigstens einem der vorangehenden Ansprüche, dadurch gekennzeichnet, daß für die erfindungsgemäße Folie polare Copolymere mit einem Schmelzflußindex von 0,1 g/10 min bis 100 g/10 min bei 190°C und 2,16 kg Prüfmasse (DIN 53 735), bevorzugt zwischen 1,0 g/10 min und 75 g/10 min eingesetzt werden.

13. Folie nach wenigstens einem der vorangehenden Ansprüche, dadurch gekennzeichnet, daß Ethylenvinylacetat-Copolymere als Matrixharze eingesetzt werden, wobei eins der mindestens zwei eingesetzten Harze in einer bevorzugten Ausführung einen Schmelzflußindex zwischen 0,1 g/10 min und 15 g/10 min bei 190°C und 2,16 kg Prüfmasse (DIN 53 735), besonders bevorzugt zwischen 1,0 g/10 min und 8 g/10 min hat und mindestens ein weiteres Harz einen Schmelzflußindex von 15 g/10 min bis 75 g/10 min bei 190°C und 2,16 kg Prüfmasse (DIN 53 735), bevorzugt von 30 g/10 min bis 60 g/10 min besitzt.

14. Verwendung von Folie nach wenigstens einem der vorangehenden Ansprüche, dadurch gekennzeichnet, daß sie einseitig oder beidseitig einem der bekannten Verfahren zur Oberflächenbehandlung ausgesetzt wird, wobei Verfahren aus der Gruppe umfassend Corona-Behandlung, Flamm-Behandlung und Fluor-Behandlung bevorzugt werden.

15. Verwendung von Folie nach wenigstens einem der vorangehenden Ansprüche, dadurch gekennzeichnet, daß sie zur Herstellung von Verbunden und/oder Laminaten aus oder mit anderen Substraten eingesetzt wird.

16. Verwendung von Folie nach wenigstens einem der vorangehenden Ansprüche, dadurch gekennzeichnet, daß die Folie zum Fixieren anderer Substrate gegeneinander eingesetzt wird

17. Verfahren zur Herstellung von Verbunden aus beliebigen Substraten und einer erfindungsgemäßen Folie, dadurch gekennzeichnet, daß man die Substrate und eine Folie gemäß Anspruch 1 unter Wärme- und Druckeinwirkung zusammenführt, wobei die Folie zwischen den Substraten liegt.

18. Verfahren nach Anspruch 18, dadurch gekennzeichnet, daß als Substrate Papiere, Pappen, Kunststoffe, Metalle, Hölzer, Gläser, Stoffe, Gewebe, Vliese, pflanzliche Produkte oder Netze Anwendung finden.

## Claims

1. Thermoplastic melt-adhesive film which is free from release layers, has at least one layer and is produced from a olefin copolymer resin mixture which is broken down under adequate shear, characterized in that it can be wound up and unwound without additional use of a release material, is substantially free from antiblocking agents and/or lubricants and is formed substantially from olefin copolymers with polar comonomers containing oxygen atoms, wherein the olefin copolymer resin mixture comprises at least two olefin copolymer resins A and B with an identical olefinic base monomer and an identical polar comonomer containing oxygen atoms, and resins A and B differ in respect of their polar comonomer content and their viscosity at the processing temperature, the total content of oxygen-containing comonomers of the total weight of the polymer resins forming the film being between 10 % by weight and 40 % by weight.

2. Film according to claim 1, characterized in that ethylene is used as the essential olefinic monomer of the olefin copolymer resins employed for formation of the copolymer resin mixture.

3. Film according to claim 1 and/or 2, characterized in that vinyl acetate in preferably non-hydrolyzed form or acrylic acid or its esters or salts or methacrylic acid or its esters or salts are used as the comonomer radicals of the polar copolymers.

4. Film according to one of claims 1 to 3, characterized in that the total content of the oxygen-containing comonomers of the total weight of the polymer resins forming the film is at least 22 % by weight and not more than 30 % by weight.

5. Film according to at least one of the preceding claims, characterized in that the maxima of its thermoanalytically determined main melting peak, determined in accordance with ASTM D 3418, are below 90°C.

6. Film, characterized in that it has a lower-melting outer layer according to one of the preceding claims and a second higher-melting outer layer.

7. Film according to claim 6, characterized in that the melting temperatures, determined in accordance with ASTM D 3418 as the temperatures assigned to the peak extreme value of the endothermal peak of largest area, of the two outer layers of the dublo film deviate from one another by at least 15°C.

8. Film according to claim 6 and/or 7, characterized in that the layer which softens at a higher temperature is formed from polyethylene and/or ethylene copolymer resins.

9. Film according to claim 6 and/or 7, characterized in that the layer which softens at a higher temperature is formed from polypropylene and/or propylene copolymer resins.

10. Film according to at least one of the preceding claims, characterized in that it has a thickness of at least 20 µm and not more than 200 µm, and in a particularly preferred embodiment between 30 µm and 70 µm.

11. Film according to at least one of the preceding claims, characterized in that the film is produced by the blown film process.

12. Film according to at least one of the preceding claims, characterized in that polar copolymers with a melt flow index of 0.1 g/10 min to 100 g/10 min at 190°C and a test weight of 2.16 kg (DIN 53 735), preferably between 1.0 g/10 min and 75 g/10 min, are employed for the film according to the invention.

13. Film according to at least one of the preceding claims, characterized in that ethylene/vinyl acetate copolymers are employed as the matrix resins, in a preferred embodiment one of the resins, of which at least two are employed, having a melt flow index of between 0.1 g/10 min and 15 g/10 min at 190°C and a test weight of 2.16 kg (DIN 53 735), particularly preferably between 1.0 g/10 min and 8 g/10 min, and at least one further resin having a melt flow index of 15 g/10 min to 75 g/10 min at 190°C under a test weight of 2.16 kg (DIN 53 735), preferably 30 g/10 min to 60 g/10 min.

14. Use of film according to at least one of the preceding claims, characterized in that it is exposed on one side or on both sides to one of the known processes for surface treatment, processes from the group consisting of corona treatment, flame treatment and fluorine treatment being preferred.

15. Use of film according to at least one of the preceding claims, characterized in that it is employed for the production of composites and/or laminates of or with other substrates.

16. Use of film according to at least one of the preceding claims, characterized in that the film is employed for fixing other substrates against one another.

17. Process for the production of composites from any desired substrates and a film according to the invention, characterized in that the substrates and a film according to claim 1 are brought together under the action of heat and pressure, the film lying between the substrates.

18. Process according to claim 18, characterized in that papers, cardboards, plastics, metals, timbers, glasses, fabrics, woven fabrics, nonwovens, plant products or meshes are used as the substrates.

## Revendications

1. Film adhésif à l'état fondu thermoplastique, au moins monocouche, sans couche de séparation fabriqué à partir d'un mélange de résines de copolymères d'oléfines qui est dissous sous cisaillement suffisant, caractérisé en ce qu'il est enroulé et déroulé essentiellement sans utilisation supplémentaire de moyens contre le blocage et/ou contre le glissement et qu'il est constitué essentiellement de copolymères d'oléfines avec des comonomères polaires contenant des atomes d'oxygène, le mélange de résines de copolymères d'oléfines étant constitué d'au moins deux résines A et B de copolymères d'oléfines avec un monomère de base oléfinique identique et un copolymère polaire identique contenant des atomes d'oxygène et les résines A et B se différentiant par leur quantité de comonomères polaires et leurs viscosité à la température de transformation, la quantité totale des comonomères contenant de l'oxygène étant, par rapport à la masse totale de la résine polymère constituant le film, entre 10% en masse et 40% en masse.

2. Film selon la revendication 1, caractérisé en ce qu'on utilise l'étylène comme monomère oléfinique essentiel de la résine de copolymères oléfiniques utilisée pour la formation du mélange de résines de copolymères.

3. Film selon la revendication 1 et/ou 2, caractérisé en ce qu'on utilise comme restes de comonomères des copolymères polaires, l'acétate de vinyle, de préférence sous forme non saponifiée ou l'acide acrylique ou ses esters ou ses sels ou l'acide méthacrylique ou ses sels ou ses esters.

4. Film selon l'une des revendications 1 à 3, caractérisé en ce que la quantité totale des comonomères contenant de l'oxygène par rapport à la masse totale des résines polymères constituant le film est d'au moins 22% en masse et au plus 30% en masse.

5. Film selon au moins l'une des revendications précédentes, caractérisé en ce que le maxima de son pic de fusion principal déterminé par analyse thermique, défini selon la norme ASTM D 3418, est inférieur à 90°C.

6. Film caractérisé en ce qu'il présente une couche externe fondant à température inférieure selon l'une des revendications précédentes et une deuxième couche externe fondant à température supérieure.

7. Film selon la revendication 6, caractérisé en ce que les températures de fusion, définies selon la norme ASTM D 3418 comme étant les températures qui correspondent à la valeur extrême de pic du pic endothermique le plus grand en surface, des deux couches externes du film double sont différentes l'une de l'autre d'au moins 15°C.

8. Film selon la revendication 6 et/ou 7, caractérisé en ce que la couche se ramollissant à la température la plus élevée est constituée de résines de polyéthylène et/ou de résines de copolymère de polyéthylène.

9. Film selon la revendication 6 et/ou 7, caractérisé en ce que la couche se ramollissant à la température la plus élevée est constituée de résines de polypropylène et/ou de résines de copolymère de polypropylène.

10. Film selon au moins l'une des revendications précédentes, caractérisé en ce qu'il possède une épaisseur d'au moins 20 µm et d'au plus 200 µm et dans une forme de réalisation particulièrement préférée, entre 30 µm et 70 µm.

11. Film selon au moins l'une des revendications précédentes, caractérisé en ce que le film est préparé selon un procédé de film soufflé.

12. Film selon au moins l'une des revendications précédentes, caractérisé en ce qu'on utilise pour le film selon l'invention un copolymère polaire avec un indice de fluidité à l'état fondu de 0,1 g/10 min à 100 g/10 min à 190°C et 2,16 kg de masse d'essai (DIN 53 735), de préférence entre 1,0 g/10 min et 75 g/10 min.

13. Film selon au moins l'une des revendications précédentes, caractérisé en ce qu'on utilise comme résine de matrice un copolymère d'éthylène et d'acétate de vinyle, une des au moins deux résines utilisées dans une forme de réalisation préférée a un indice de fluidité à l'état fondu entre 0,1 g/10 min et 15 g/10 min à 190°C et 2,16 kg de masse d'essai (DIN 53 735), de préférence entre 1,0 g/10 min et 8 g/10 min et au moins une autre résine a un indice de fluidité à l'état fondu de 15 g/10 min à 75 g/10 min à 190°C et 2,16 kg de masse d'essai (DIN 53 735), de préférence de 30 g/10 min à 60 g/10 min.

14. Utilisation d'un film selon au moins l'une des revendications précédentes, caractérisée en ce qu'on effectue d'un côté ou des deux côtés un traitement de surface selon un procédé connu, le procédé étant de préférence choisi dans le groupe comprenant un traitement Corona, un traitement par flamme et un traitement par le fluor.

15. Utilisation d'un film selon au moins l'une des revendications précédentes, caractérisée en ce qu'on l'utilise pour la fabrication de composés et/ou de stratifiés à partir ou avec d'autres substrats.

16. Utilisation d'un film selon au moins l'une des revendications précédentes, caractérisée en ce qu'on utilise le film pour la fixation d'autres substrats les uns avec les autres.

17. Procédé de préparation de composés à partir de substrats quelconques et d'un film selon l'invention, caractérisé en ce qu'on assemble les substrats et un film selon la revendication par action de la chaleur et de la pression, le film étant disposé entre les substrats.

18. Procédé selon la revendication 18, caractérisé en ce qu'on utilise comme substrats des papiers, des cartons, des matières plastiques, des métaux, du bois, du verre, des étoffes, des tissus, des non tissés, des produits végétaux ou des produits réticulés.
